# EUROPEAN PATENT SPECIFICATION

(11) **EP 0 373 594 B1**
(45) Date of publication and mention of the grant of the patent: **28.08.1996**
(21) Application number: 89122924.7
(22) Date of filing: 12.12.1989
(51) Int. Cl.: G06F 12/06

(54) **Computer memory having its output lines selected for connection to a data bus by the memory address**
Rechnerspeicher mit Ausgangsleitungen, welche mittels der Speicheradresse zur Verbindung mit einem Datenbus ausgewählt werden
Mémoire d'ordinateur dont les lignes de sorties sont sélectionnées pour la connexion au bus de données par l'adresse de mémoire

(30) Priority: 15.12.1988 US 284899; 28.03.1989 US 329528
(43) Date of publication of application: 20.06.1990
(73) Proprietor: SANYO ELECTRIC CO., LTD., Moriguchi-shi, Osaka (JP)
(72) Inventor: Matsui, Mitsuru, Osato-gun Saitama-ken (JP); Sritanyaratana, Siripong, Union City California 94587 (US); Wong, William, Fremont California 94539 (US)
(74) Representative: Glawe, Delfs, Moll & Partner

(56) References cited:
- US-A- 3 858 187
- PATENT ABSTRACTS OF JAPAN, vol. 6, no. 92 (P-119)[970] 29th May 1982 & JP-A-57 27 476
- IBM TECHNICAL DISCLOSURE BULLETIN, vol. 11, no. 8, January 1969, pages 1019-1020, New York, US; G.A. GATES et al.: "Multiword size storage"

## Description

This invention relates generally to digital computers and, more specifically, to a random access memory structure.

A typical random access memory (R.A.M.) is formed from a plurality of integrated circuit chips. The chips are connected together in a manner to make a number of bit locations from each of the plurality of memory chips that are at the same relative address in each chip at one time connectable to a data bus. For example, if the data bus is 16 bits wide but the individual memory chips make only a nibble (four bits) available at their data output lines in response to a single address, four such chips are used in parallel so that four nibbles, for a total of sixteen bits, are connected to the data bus in response to the same address being applied to each of the four chips. The depth of the chips is then selected in order to provide the total memory capacity desired.

Currently, a memory having a size of 640 kilobytes (each byte including 8 bits) is a popular standard. Typically, four memory chips, each one nibble wide, are connected in parallel to the data bus and respond to a common address for combining their data bits together in order to form a 16-bit data word. The most common such chip has a total capacity of 256k deep by 4-bits wide' (256,000 kilo-nibbles), four of which form a memory having a total capacity of 512 kilobytes. Therefore, the depth of the memory is supplemented by additional four chips of at least 64k by 4-bits in capacity, 64 kilo-nibbles being necessary from each in order to provide a memory having a depth sufficient that its total capacity is 640 kilobytes. Since the desired 64 kilo-nibble by 4 bit wide chips are not generally available, larger memory chips are often employed and the excess storage locations are simply unused. Alternatively, the memory may be made from a total of four chips that each have a larger capacity, such as four 1 megbit by 4-bit chips which are the next commercially available size after the 256k by 4-bit chips most commonly used. Excess capacity of the 1 Meg.chips is then simply unused. In addition to increasing memory cost, the provision of unused memory capacity and/or the use of a larger number of circuit chips to form the memory increase its size and power requirements, which is undesirable in many applications, particularly in portable computers.

US-A-3 858 187 discloses a read only memory system employing memory elements of fixed wordlength which are combined to produce words of any desired length. To this end a first part of a program word is stored in a first memory, a second part is stored in a second memory and a last part is stored in a third memory. This last part is read from the third memory using a gating arrangement in order to achieve a variable wordlength.

It is an object of the invention to provide an architecture of a random access memory that minimizes the number of chips and maximizes their utilization.

It is another object of the invention to provide such a memory having a minimum size, minimum power requirement and reduced cost.

These objects are achieved by a computer system memory as defined in claim 1, the dependent claims related to further developments of the invention.

According to the present invention, briefly and generally, data words having a width equal to that of a data bus are stored in several bit portions at different locations in various memory chips. That is, the architecture of the present invention avoids the commonly applied constraint that each portion of a data word must be stored at the same relative location of each of the chips of the memory. According to the present invention, the memory is made to be wider in terms of number of bits than that of the data word to be simultaneously accessed. A control circuit responsive to the memory addresses selects a portion of the memory width equal to the desired data word in a manner that all of the chips are fully utilized.

According to a preferred embodiment of the invention, a memory having a number of chips to provide a width equal to that of the desired data word also includes at least one extra chip whose contents are selectively substituted for one of the other regular memory chips, in response to the memory address. The result is an architecture that allows commonly, commercially available.R.A.M. chips to be fully utilized for a desired total size of memory while, at the same time, minimizing the number of chips necessary for a given size memory. The various aspects of the present invention are particularly useful in portable computers and other applications where any of the power, size or cost considerations are prevalent.

Additional objects, advantages and features of the various aspects of the present invention will become apparent from the following description of a preferred embodiment thereof, which description should be taken in conjunction with the accompanying drawings.

Figure 1 generally illustrates a typical computer architecture;
Figure 2 schematically illustrates a popular existing architecture of the memory of the computer system of Figure 1;
Figure 3 schematically illustrates an example of the improved memory architecture according to the present invention;
Figure 4 is a circuit block diagram of a random access memory that utilizes the architecture conceptually illustrated in Figure 3;
Figures 5 and 6 are tables illustrating the function of the decoding circuits in the memory system of Figure 4;
Figures 7(A), 7(B) and 7(C) show the logic of address translators of the memory-system of Figure 4;
Figure 8 illustrates another memory architecture according to the present invention; and
Figure 9 is a table that illustrates the operation of the memory of Figure 8.

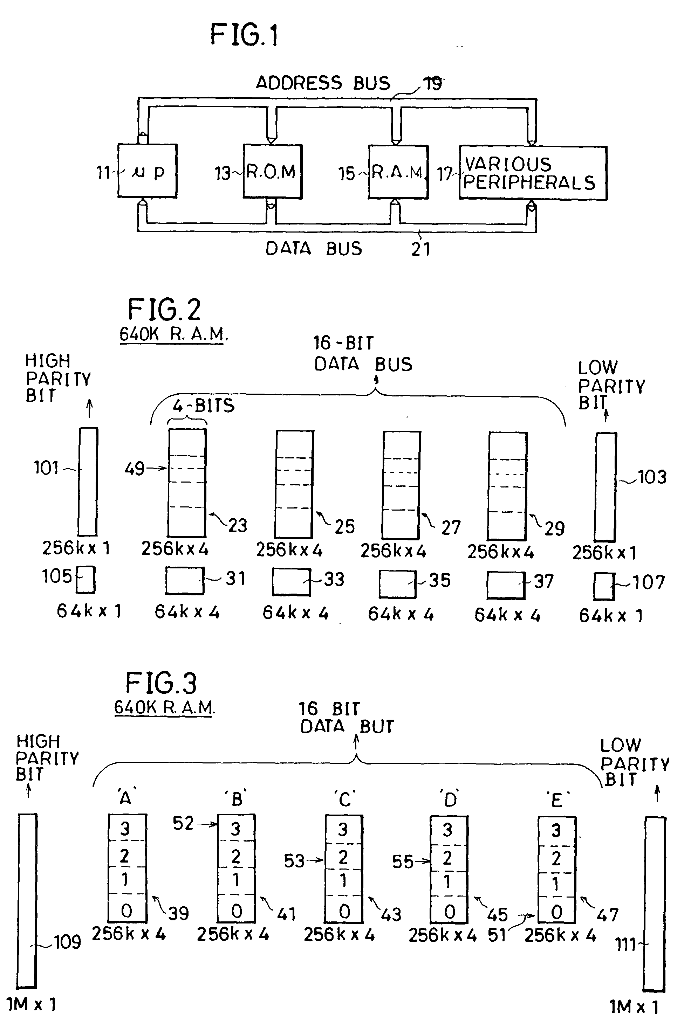

Before describing an example of the present invention, a typical existing computer system and R.A.M. architecture are described with respect to Figures 1 and 2. A typical computer system generally includes a microprocessor 11, a read-only-memory 13, a random access memory 15, and various peripherals 17 that are all connected to a common address bus 19 and a common data bus 21. In many systems, the address and data buses 19 and 21 are implemented as a single physical bus that is time-multiplexed between address and data functions.

Figure 2 shows an example of a R.A.M. 15 having a width of 16 bits for use on a 16-bit wide data bus, and having a total capacity of 640 kilo-bytes (655,360 bytes). This is the maximum size memory that can be addressed by a 20-bit address, and is currently the most common in personal computers.

Referring to Figure 2, the 16-bit data word width is provided by four individual memory chips 23, 25, 27 and 29 connected in parallel. A nibble (4-bits) of the 16-bit word is stored in each of these four memory chips at the same location. Thus, in response to a given address on an address bus (not shown in Figure 2) connected to each of these chips, the four bits simultaneously read out from each chip are combined in parallel to form the 16-bit word.

A common commercially available memory chip of this type has a total of 262,144 (256k) such 4-bit nibble addressable storage locations. The combination of the capacity of all of the four chips 23, 25, 27 and 29, is 524,288 (512k) bytes (each byte being 8-bits). In order to provide additional 128 kilo-bytes of memory, additional memory chips 31, 33, 35 and 37 are provided as depth extensions of the individual memory chips 23, 25, 27 and 29, respectively. Each of the additional memory chips 31, 33, 35 and 37 needs only to have a capacity of 64k nibbles but since this size of memory chip is not commonly available commercially, it is often found that 256k chips are used instead. Of course, the excess, unused storage capacity increases the cost of the computer, consumes power and takes space. Even if 64k chips can be used for memory chips 31, 33, 35 and 37, the total number of chips for the memory is 8, and, even though there is no wasted memory storage capacity, the use of so many small chips has the same effect of increasing power consumption, utilizing space and increasing cost.

According to the R.A.M. organization of the present invention, as shown in Figure 3, only five memory chips 39, 41, 43, 45 and 47, each having the same capacity, are utilized for the same 640k memory. Rather than adding four chips 31, 33, 35 and 37, as is the present technique as shown in Figure 2, a single fifth chip 47 has been added with the same capacity as each of the other four chips.

What allows this is the realization that all four nibbles of a 16-bit data word do not need to come from the same locations or addresses of each of the four chips, such as illustrated by the address and location 49 (Figure 2) in the present architectures. There, four bits of the 16-bit data word are accessed at the same location of each of the chips 23, 25, 27 and 29. When that constraint is eliminated, as is done in the present invention, the storage capacity of the four small chips 31, 33, 35 and 37 of Figure 2 can be combined with a single fifth chip 47 of Figure 3. Thus, the eight memory chips of Figure 2 have been reduced to five chips in the embodiment of Figure 3, thus allowing the savings of cost, space and power consumption as previously discussed.

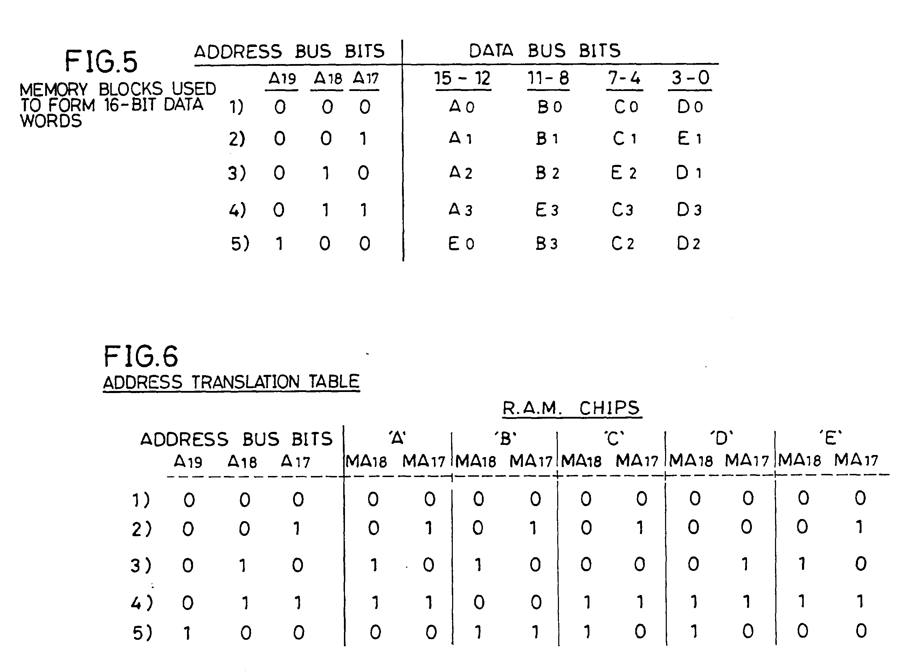

In effect, the width of the memory of Figure 3 is 20 bits. Four bits, or 1 nibble, are provided by each of the five chips 39, 41, 43, 45 and 47. However, since the data word to be written into the memory or read from it at one time is only 16 bits wide, only four of those nibbles need to be accessed at any one time in order to provide a 16-bit word. In order to do so, some 16-bit words will have to have their nibbles stored at different locations among four of the five memory chips 39, 41, 43, 45 and 47. As an example, as shown on line 5 of-the table of Figure 5, bits 12-15 of the data word are obtained at a location 51 of chip 47 (chip 'E') at segment '0' denoted in the table of Figure 5 as memory segment "E0". The data word bits 8-11 are obtained at a location 52 of memory chip 41 from memory block B3, bits 4-7 from location 53 of memory chip 43 at block C2, and bits 0-3 at location 55 in chip 45 of memory block D2. The particular four memory chips accessed in any one read or write operation is determined by bits 17-19 of the address, as shown in the left hand column of the Figure 5 table. In the example of line 5 of that table, memory chip 39 (chip 'A') is not utilized in forming the 16-bit word. But other data words, such as those having address bits 17-19 of line 4 of the Figure 5 table, utilize memory chips 39 (chip 'A'), 47 ('E'), 43 ('C'), and 45 ('D').

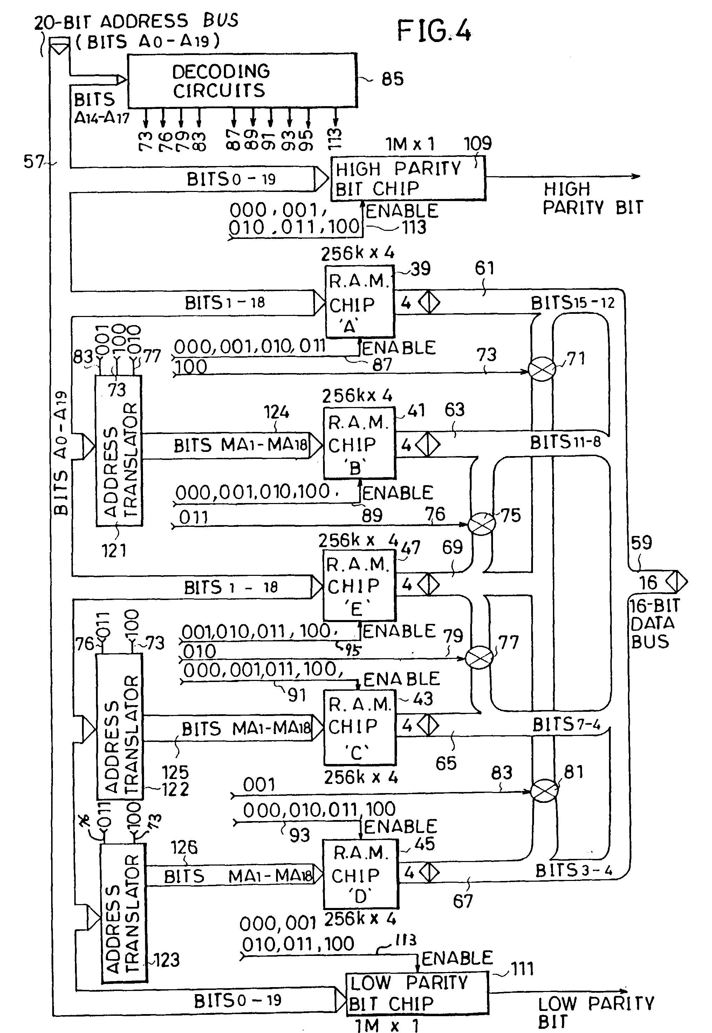

An example of a preferred implementation of the memory organization described with respect to Figure 3 is given in the circuit diagram of Figure 4. In response to a 20-bit address on an address bus 57, 16 bits of storage locations within the memory chips 39, 41, 47, 43 and 45 are connected with a data bus 59 for either reading or writing the addressed memory locations. The memory chip 39 ('A') having data lines 61 connected to bit lines 12-15 of the data bus 59. Similarly, memory chip 41 ('B') has its four data lines 63 normally connected to bit lines 8-11 of the data bus 59. Likewise, memory chip 43 ('C') has its four data lines 65 normally connected as bit lines 4-7 of the data bus 59, and chip 45 ('D') has its data lines connected as bit lines 0-3 of the data bus 59.

Four data lines 69 of the fifth chip 47 ('E') are not permanently connected with any particular data bus bit lines, but rather are connected for replacing the data lines of the other four chips 39, 41, 43 and 45 in connection to the data bus 59. Specifically, the four data lines 69 are connected to data bus bit lines 12-15 through a semiconductor switching circuit 71 that is controlled to be on or off by a control signal in a line 73. Similarly, the data bit line 69 are connected through another such switching circuit 75, controlled by a signal in the line 76, to bit lines 8-11 of the bus 59. Likewise, a switch 77, controlled by a signal in a control line 79 connects the four data lines 69 with data bus bit lines 4-7, and a switch 81, controlled by a signal in line 83, connects those lines to data bus bit line 0-3.

Decoding logic 85 receives bit lines A19-A17 of the address bus 57 and has as a purpose the selection of the four memory chip blocks to be connected to the data bus 59 for any particular access. This is accomplished by placing an enabling signal on one of the control lines 73, 76, 79 or 83, or on none of these control lines, in order to set each of the switches 71, 75, 77, and 81 into a state that selects a desired combination of four of the five memory chips for connection to the data bus 59. Simultaneously, the decoding logic generates enable signals in four of five chip enable control lines 87, 89, 91, 93 and 95. These enable lines are connected to the memory chips 39 ('A'), 41 ('B'), 43 ('C'), 45 ('D') and 47 ('E'), respectively.

This function is accomplished by the circuit 85 passively decoding the three address bit lines A19-A17. Five specific combinations of bit patterns in those address lines, indicated in the table of Figure 5, provide five different combinations of control signals in control lines 73, 76, 79, and 83, and in chip enable lines 87, 89, 91, 93, and 95.

In line 1 of Figure 5, the combination of memory blocks selected by an A19-A17 bit pattern of 000 is shown. In response to that address bit pattern input, the decoding circuits 85 deasserts an enabling signal in any of the output control lines 73, 76, 79 and 83, thus connecting R.A.M. chips 39 ('A'), 41 ('B'), 43 ('C'), and 45 ('D') to the 16-bit data bus. Simultaneously, all of the four chip enable lines 87, 89, 91 and 93 are rendered active, only chip enable line 95 not being asserted. Thus, it can be seen that memory chip 47 ('E') is neither connected to the data bus 59 nor enabled.

Similarly, in line 2 of table 5, for the pattern 001 of address bits A19-A17 there shown, the control line 83 is enabled, while the control lines 73, 76 and 79 are disabled, thereby connecting four bits addressed in memory chip 47 ('E') for those of memory chip 45 ('D') in data bus bit locations 0-3 by connection of the chip 47 to the data bus 59 through switching circuit 81. Simultaneously, all of the five chip enable lines are active but line 93 since the memory chip 45 ('D') that it controls is not accessed at this time and thus desired to be disabled.

In the condition indicated at line 3 of the Figure 5 table, an enable signal is provided in control line 79 but not in any of the control lines 73, 76 and 83, while no chip enable signal occurs in line 91, which disables memory chip 43 ('C'). Similarly, line 4 of the Figure 5 table indicates a condition where the line 76 is enabled, while chip enable line 89 (chip 'B') is not. Line 5 of the Figure 5 table shows the final condition where line 73 is enabled and chip enable line 87 (chip 'A') is disabled.

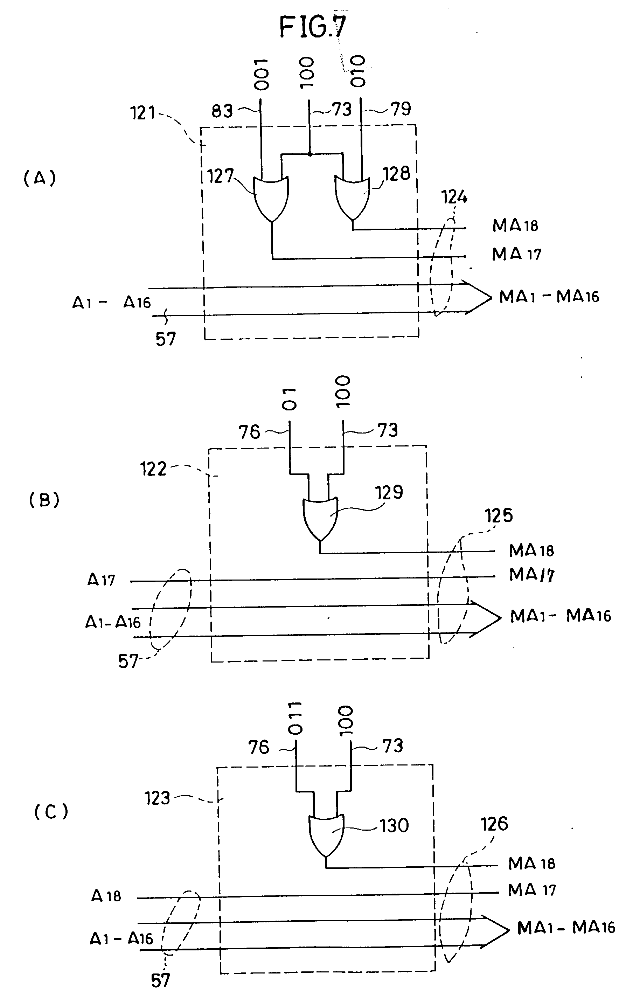

In order to be able to address the blocks of the memory chips in accordance with the table of Figure 5, a translation of the system bus address needs to be made for memory chips 41, 43 and 45 (chips 'B', 'C' and 'D', respectively). Accordingly, address translator circuits 121, 122 and 123 are provided between the system bus 57 and their respective memory chips. The logic circuits of these address translators are given in Figures 7(A), 7(B) and 7(C). The translation affects the values of only bit numbers 17 (MA17) and 18 (MA18) of the address, as shown by the table of Figure 6 and the circuits of Figure 7. The address to the remaining two memory chips 39 and 47 (chips 'A' and 'E') is provided directly from the system bus 57, without any translation. This can be seen from the columns of the table of Figure 6 for chips 'A' and 'E', where the system address bus bit values A17 and A18 are the same, respectively, as the address bit values MA17 and MA18 applied to those two chips.

For the remaining three chips, however, there is some translation. The two bits MA17 and MA18 for the memory chip 41 are given in column 'B' of the table of Figure 6 for five combinations of the system bus address bits A17, A18 and A19. The circuit for accomplishing that translation is shown in Figure 7(A). Bits MA1-MA16 of the address on lines 124 applied to the memory chip 'B' come directly from bits A1-A16 of the system bus. The remaining two bits MA17 and MA18 are the result of respective OR-gates 127 and 128 decoding the signals in lines 73, 79 and 83 from the decoding circuits 85 (Figure 3). Line 73 is connected to one input of each of the OR-gates 127 and 128, while line 83 is connected to the second input of OR-gate 127 and line 79 to the second input of OR-gate 128.

Only the bit MA18 in circuits 125 applied as the address to memory chip 'C' is translated by the translator circuit 122 of Figure 7(B). This is shown in column 'C' of the table of Figure 6. That bit is the result of signals in lines 73 and 76 being logically ORed by an OR-gate 129. The remaining address bits MA1-MA17 correspond directly to system address bits A1-A17.

Similarly, the bit position MA18 in the address to the memory chip 'D' is translated, as shown in Figure 7(C) and in column 'D' of Figure 6. An OR-gate 130 has two inputs connected to lines 73 and 76 and its output becomes the value of the address bit MA18. Memory address bit MA17 comes directly from system address bit A18. The remaining address bits MA1-MA16 correspond directly to system address bits A1-A16.

It can be noted from the tables of Figures 5 and 6 that the logic has been designed in this example to cause address bit locations MA17 and MA18 to be "0" for the memory chip that is not selected during a particular operation. This simplifies the address decoding logic 85 and that of the translators 121, 122 and 123.

Of course, although the specific address translation circuits described above are preferred, it will be recognized that there are other circuits that can alternatively be used to obtain the same result.

Nearly all memory systems also store one parity bit for each 8 bits (byte) of a data word. Referring again to Figure 2, a 256k by 1-bit memory 101 stores a bit for each byte stored in the memory chips 23 and 25. A similar memory 103 stores a bit for each byte stored in memories 27 and 29. Further, for the extended 64k memories 31 and 33, a 64k by 1-bit memory 105 stores parity bits. Similarly, a memory 107 stores parity bits for the memory chips 35 and 37.

In the improved memory system of Figures 3 and 4, only two parity bit memories 109 and 111 are utilized. Each of these memories is chosen to be 1 meg by 1-bit in capacity since that is what is readily available commercially. However, of course, only 640k bits of each memory are utilized. The 640k bits stored in the memory 109 are the parity bits that go along with the high byte of the data word while the parity bits stored in 640k of the memory 111 go with the low byte of the data word. The memories 109 and 111 are enabled for all five of the conditions indicated in the table of Figure 5, through another enable control line 113 (Figure 4) from the decoding circuits 85.

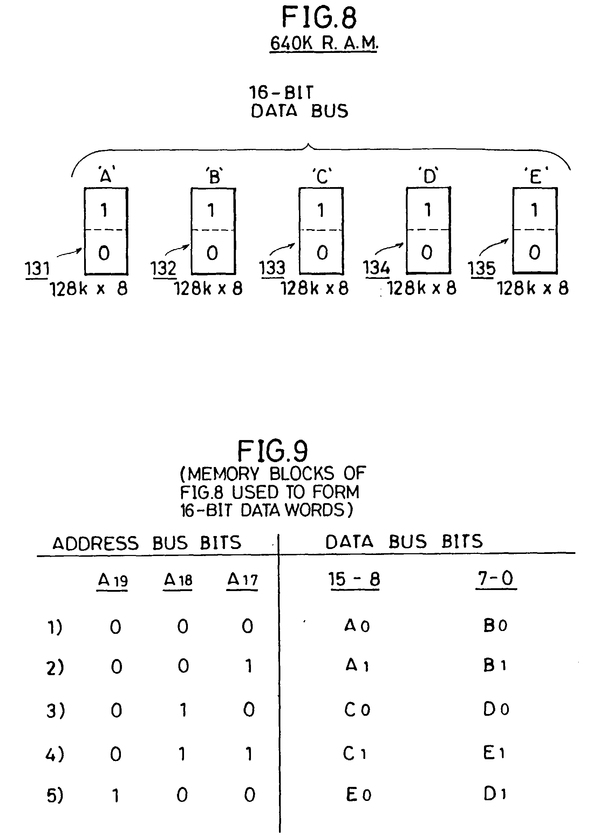

As is apparent from the foregoing description, the principles of the present invention can be utilized in many other types of memory systems. For example, 8-bit wide memory chips can be employed. Various types of R.A.M. can be employed, including dynamic RAMs, static RAMs, read-only-memories, EEPROMs, and the like. An example of the architecture of a memory formed of 8-bit wide static RAMs is given in Figures 8 and 9. A 16-bit data word is formed from two bytes, one from one of the five memory chips 131, 132, 133, 134, and 135, and the other byte from another of these memory chips. Each memory chip has two blocks "0" and "1" and the locations of the two bytes of data as a function of address bits 17, 18 and 19 is given in the table of Figure 9.

The principles of the present invention 'are also useful for memories having a capacity of other than 640K bytes. In general, the bus width of any system is equal to or less than the width of the word stored in an individual memory chip (in cases where that width is the same for each memory chip) multiplied by-an integer.

The invention is particularly useful when an extra amount of memory, such as 128K bytes, is needed after available chips have been configured into the basic memory. For example, a 384K byte memory can be configured of three 256k x 4 memory chips, for an eight bit wide bus system, and a 896K byte memory from seven such memory chips.

In addition, the principles of the present invention apply to computer systems having a bus of something other than 16-bits in width. They also'can be applied to 8, 32 or 64 bit data path systems.

## Claims

1. A computer system memory having memory means coupled to system address and data buses, said memory means being configured from a number of integrated storage chips (39-47) that are capable of connecting a predetermined number of storage locations in parallel onto the data bus (59) in response to an address on the address bus (57), comprising:
a number of said storage chips (39-47) being in excess of a number necessary to connect the output lines of the storage chips corresponding to said predetermined number of storage locations in parallel with the data bus (59), and
means (85) responsive to the address on the address bus for connecting the output lines of a combination of less than all of said chips to the data bus (59) during a single read or write operation of said predetermined number of bits, said connecting means (85) utilizing all of said number of circuit chips in various combinations as various data storage locations are addressed and
address translating means (121-123) for translating at least some address bits of said address on the address bus and for applying a translated address to at least some of the storage chips.

2. Computer system memory according to claim 1, wherein said connecting means (85, 71, 75, 77, 81) includes means for connecting the output lines of a predetermined subset of storage chips to said data bus for selectively substituting different ones of the primary circuit chips by at least one additional circuit chip in response to particular addresses.

3. Computer system memory as claimed in claim 1, wherein a microprocessor is provided and said memory means is a random access memory of substantially 640 kilobytes of data capacity, said mircoprocessor and memory communicating with each other trough said address bus (57) and a 16-bit data bus (59), said random access memory structure comprising:
five integrated circuit storage chips each storing substantially 262,144 data nibbles of 4 bits each, and
wherein said connecting means is responsive to at least three bits of the address bus (57) for connecting a predetermined combination of four of said five integrated circuit storage chips to said data bus (59) in response to a given single address in order to connect a total of 16 bits therewith, all five storage chips being utilized in various combinations of four in response to different addresses on said address bus (57), thereby providing substantially 655,360 storage locations of 8-bit bytes that are individually connectable to the data bus.

4. The computer system random access memory of claim 3, wherein said predetermined subset includes four of the storage chips for selectively substituting different ones of the four primary chips by the fifth memory chip in response to particular addresses.

5. The computer system random access memory of claim 4 wherein said substituting means (71-81) includes means responsive to said at least three address bus bits for translating said address bits and for connecting the data output lines of the fifth memory chip to said data bus while at the same time disabling said one of the four memory chips.

6. The computer system random access memory according to claim 5, wherein said translating means (121-123) is responsive to said at least three address bus bits.

7. The computer system memory according to claim 1, wherein said address and data busses are physically the same with address and data functions time-multiplexed thereon.

8. A method for extending the capacity of a memory of a computer system having a random access memory that combines nibbles from individual memory chips in parallel to form a word from a given number of nibbles equal to the number of memory chips, said method extending the capacity of the memory beyond the capacity of said given number of memory chips, comprising the steps of:
providing an additional memory chip from which a nibble of data can be read in parallel with that of said given number of memory chips, such that the number of memory chips exceeds the given number of nibbles,
combining the nibbles of less than all memory chips to form a word,
translating at least some address bits of the memory addresses prior to applying it to at least some of the memory chips, determining from each of a plurality of memory addresses one of said given number of nibbles that is to be disabled, and substituting said disabled nibble by the nibble of said additional memory chip.

## Patentansprüche

1. Rechner-Systemspeicher mit Speichermitteln, die mit Systemadress- und Datenbussen verbunden sind, wobei die Speichermittel aus einer Anzahl von integrierten Speicherchips (39-47) konfiguriert sind, die in der Lage sind, eine vorgegebene Anzahl von Speicherplätzen parallel mit dem Datenbus (59) in Abhängigkeit von einer Adresse auf dem Adressbus (57) zu verbinden, mit:
einer Anzahl der Speicherchips (39-47), die größer ist als eine Anzahl, die erforderlich ist, um die Ausgangsleitungen der Speicherchips entsprechend der vorgegebenen Anzahl von Speicherplätzen parallel mit dem Datenbus (59) zu verbinden, und
Mitteln (85), die auf die Adresse auf dem Adressbus ansprechen, zum Verbinden der Ausgangsleitungen einer Kombination von weniger als allen der Speicherchips mit dem Datenbus (59) während eines einzelnen Lese- oder Schreibvorganges der vorgegebenen Anzahl von Bits, wobei die Verbindungsmittel (85), die alle der Anzahl von Schaltungschips in verschiedenen Kombinationen als verschiedene Datenspeicherplätze verwenden, adressiert werden, und
Adressübersetzungsmitteln (121-123) zum Übersetzen von zumindest einigen Adressbits der Adresse auf dem Adressbus und zum Anlegen einer übersetzten Adresse an zumindest einige der Speicherchips.

2. Rechnersystemspeicher nach Anspruch 1,
wobei die Verbindungsmittel (85, 71, 75, 77, 81) Mittel aufweisen zum Verbinden der Ausgangsleitungen eines vorgegebenen Untersatzes von Speicherchips mit dem Datenbus zum selektiven Ersetzen verschiedener der Primärspeicherchips durch zumindest einen zusätzlichen Schaltungschip in Abhängigkeit von bestimmten Adressen.

3. Rechnersystemspeicher nach Anspruch 1,
wobei ein Mikroprozessor vorgesehen ist und die Speichermittel ein Freizugriffsspeicher von im wesentlichen 460 Kilobyte Datenkapazität sind, wobei der Mikroprozessor und der Speicher miteinander über den Adressbus (57) und einen 16-Bit-Datenbus (59) kommunizieren, wobei die freie Zugriffsspeicherstruktur aufweist:
fünf integrierte Schaltungsspeicherchips, die jeweils im wesentlichen 262.144 Datenportionen von jeweils vier Bit speichern, und wobei die Verbindungsmittel auf zumindest drei Bit auf dem Adressbus (57) ansprechen zum Verbinden einer vorgegebenen Kombination von vier der fünf integrierten Schaltungsspeicherchips mit dem Datenbus (59) in Abhängigkeit von einer gegebenen einzelnen Adresse, um damit insgesamt 16 Bit zu verbinden, wobei alle fünf Speicherchips in verschiedenen Kombinationen von vier in Abhängigkeit von unterschiedlichen Adressen auf dem Speicherbus (57) verwendet werden, wodurch im wesentlichen 655.360 Speicherplätze von 8 Bit Bytes geschaffen werden, die individuell mit dem Datenbus verbindbar sind.

4. Rechnersystem-Freizugriffsspeicher nach Anspruch 3,
wobei der vorgegebene Untersatz vier der Speicherchips zum selektiven Ersetzen verschiedener der vier Primärchips durch den fünften Speicherchip in Abhängigkeit von bestimmten Adressen aufweist.

5. Rechnersystem Freizugriffsspeicher nach Anspruch 4,
wobei die Ersetzungsmittel (71-81) Mittel aufweisen, die abhängig sind von zumindest den letzten drei Adressbusbits, zum Übersetzen der Adressbits und zum Verbinden der Datenausgangsleitungen des fünften Speicherchips mit dem Datenbus, wobei gleichzeitig einer der vier Speicherchips gesperrt wird.

6. Computersystem Freizugriffsspeicher nach Anspruch 5,
wobei die Übersetzungsmittel (121-123) abhängig sind von zumindest drei Adressbus-Bits.

7. Computersystemspeicher nach Anspruch 1,
wobei die Adress- und Datenbusse physikalisch diesselben sind, wobei die Adress- und Datenfunktionen zeitmultiplext sind.

8. Verfahren zur Erweiterung der Kapazität eines Speichers eines Rechnersystems mit einem Freizugriffsspeicher, der Portionen von individuellen Speicherchips parallel kombiniert, um ein Wort aus einer vorgegebenen Anzahl von Portionen zu bilden, die gleich der Anzahl von Speicherchips ist, wobei das Verfahren die Kapazität des Speichers über die Kapazität der gegebenen Anzahl von Speicherchips erweitert, mit den Schritten:
Vorsehen eines zusätzlichen Speicherchips, von dem eine Portion von Daten parallel mit der gegebenen Anzahl von Speicherchips ausgelesen werden kann, derart, daß die Anzahl von Speicherchips die gegebene Anzahl von Portionen überschreitet,
Kombinieren der Portionen von weniger als allen Speicherchips zur Bildung eines Wortes,
Übersetzen von zumindest einigen Adressbits der Speicheradressen vor ihrer Anlegung an zumindest einige der Speicherchips,
Bestimmen aus jeder einer Anzahl von Speicheradressen einer mit der vorgegebenen Anzahl von Portionen, der zu sperren ist, und Ersetzen der gesperrten Portion durch die Portion des zusätzlichen Speicherchips.

## Revendications

1. Une mémoire d'un système d'ordinateur ayant un moyen de mémoire couplé à l'adresse du système et à des bus de données, ledit moyen de mémoire étant configuré à partir d'un nombre de puces à mémoire intégrée (39-47) qui sont capables de connecter un nombre prédéterminé d'emplacements de mémoire en parallèle sur le bus de données (59) en réponse à une adresse sur le bus d'adresses (57), comprenant :
un nombre de dites puces à mémoire (39-47) excédant un nombre nécessaire pour connecter les lignes de sortie des puces à mémoire correspondant auxdits nombres prédéterminés d'emplacement de mémoire en parallèle avec le bus de données (59), et un moyen (85) répondant à l'adresse sur le bus d'adresses pour la connection des lignes de sortie d'une combinaison de moins que toutes lesdites puces au bus de données (59) durant une seule opération de lecture ou d'écriture dudit nombre prédéterminé de bits, ledit moyen de connexion (85) utilisant tout ledit nombre de puces de circuit dans différentes combinaisons comme différents emplacements de mémorisation de données sont adressés, et un moyen de transfert d'adresse (121-123) pour transmettre au moins quelques bits d'adresses de ladite adresse sur le bus d'adresse et pour fournir une adresse transmise à au moins quelques unes des puces à mémoire.

2. Mémoire de système d'ordinateur selon la revendication 1, dans laquelle ledit moyen de connexion (85, 71, 75, 77, 81) comporte un moyen pour la connexion des lignes de sortie d'un sous-ensemble prédéterminé de puces à mémoire audit bus de données pour substituer sélectivement différentes puces parmi les puces de circuits primaires par au moins une puce de circuit additionnel en réponse à des adresses particulières.

3. Mémoire de système d'ordinateur selon la revendication 1, dans lequel un microprocesseur est fourni et ledit moyen de mémoire est une mémoire vive de, pour l'essentiel 640 Kilobytes de capacité de données, ledit microprocesseur et la mémoire communiquant l'un avec l'autre au travers dudit bus d'adresse (57) et d'un bus de données de 16 bits (59), la structure de ladite mémoire vive comprenant :
cinq puces à mémoire de circuits intégrés stockant chacun pour l'essentiel 262,144 petites parties de données de quatre bits chacune, et dans lequel ledit moyen de connexion répond à au moins trois bits du bus d'adresse (57) pour connecter une combinaison prédéterminée de quatre desdites cinq puces à mémoire intégrée audit bus de donnée (59) en réponse à une adresse de donnée unique de manière à y connecter un total de 16 bits, toutes les cinq puces à mémoire étant utilisées dans différentes combinaisons de quatre puces en réponse à différentes adresses sur ledit bus d'adresse (57), produisant par là pour l'essentiel 655,360 emplacements de mémoire à bytes de 8 bits qui sont individuellement connectables au bus de données.

4. La mémoire vive du système d'ordinateur de la revendication 3, dans laquelle ledit sous-ensemble prédéterminé comporte quatre des puces à mémoire pour substituer de manière sélective différentes puces des quatre puces primaires par la cinquième puce à mémoire en réponse à des adresses particulières.

5. Mémoire vive du système d'ordinateur selon la revendication 4, dans laquelle ledit moyen de substitution (71-81) comporte des moyens répondant à au moins trois desdits bits de bus d'adresse pour transférer lesdits bits d'adresse et pour connecter la ligne de sortie de la cinquième puce à mémoire audit bus de données désactivant au même moment ladite des quatre puces à mémoire.

6. La mémoire vive du système d'ordinateur selon la revendication 5, dans laquelle ledit moyen de transfert (121-123) répond à au moins trois desdits bits de bus d'adresses.

7. Mémoire d'un système d'ordinateur selon la revendication 1, dans laquelle lesdits bus d'adresses et de données sont physiquement les mêmes avec des fonctions d'adresses et de données multiplexées dans le temps.

8. Un procédé pour étendre la capacité d'une mémoire d'un système d'ordinateur ayant une mémoire vive qui combine des petites parties de puces à mémoire individuelles en parallèle pour former un mot à partir d'un nombre donné de petites parties égal au nombre de puces à mémoire, ledit procédé étendant la capacité de la mémoire au-delà de la capacité dudit nombre donné de puces à mémoire, comprenant les étapes de :
fourniture d'une puce à mémoire additionnelle à partir de laquelle une petite partie de données peut être lue en parallèle avec celle dudit nombre de puces à mémoire, telle que le nombre de puces à mémoire excède le nombre donné de petites parties,
combinaison des petites parties de moins que toutes les puces à mémoire pour former un mot,
transfert d'au moins quelques bits d'adresse des adresses de mémoire avant de l'appliquer à au moins quelques unes des puces à mémoire, déterminant à partir de chacune d'une pluralité d'adresses de mémoire une dudit nombre donné de petites parties qui doit être désactivé, et substituant ladite petite partie désactivée par la petite partie de ladite puce de mémorisation additionnelle.
